(19) **Europäisches Patentamt European Patent Office Office européen des brevets**

(11) **EP 4 663 517 A1**

(12) **EUROPEAN PATENT APPLICATION**
published in accordance with Art. 153(4) EPC

(43) Date of publication:
**17.12.2025 Bulletin 2025/51**

(21) Application number: **24753423.3**

(22) Date of filing: **08.02.2024**

(51) International Patent Classification (IPC):
**B62D 6/00** (2006.01)   **B62D 13/06** (2006.01)
**B62D 101/00** (2006.01)

(52) Cooperative Patent Classification (CPC):
**B62D 15/0285; B62D 13/06**

(86) International application number:
**PCT/JP2024/004352**

(87) International publication number:
**WO 2024/166980 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.02.2023 JP 2023018569**

(71) Applicants:
- **JTEKT Corporation**
  **Kariya-shi, Aichi 448-8652 (JP)**
- **J-Quad Dynamics Inc.**
  **Tokyo 103-0022 (JP)**

(72) Inventor: **NITTA Nobuhiro**
**Tokyo 103-0022 (JP)**

(74) Representative: **Winter, Brandl - Partnerschaft mbB**
**Alois-Steinecker-Straße 22**
**85354 Freising (DE)**

(54) **ARTICULATED VEHICLE CONTROL DEVICE, ARTICULATED VEHICLE CONTROL METHOD, AND ARTICULATED VEHICLE CONTROL PROGRAM**

(57) A trailer is equipped with an operating unit (52) that is mechanically linked to a steered wheel (22) and an actuator (60) for steering the steered wheel. A control device (80) of the articulated vehicle is configured to execute acquisition processing and steering control processing. The acquisition processing is processing of acquiring vehicle speed and an angle detection value. The angle detection value is a detection value of a value of an angle variable related to steering of the articulated vehicle, and is detected by a sensor. The steering control processing is processing of operating the actuator based on the angle detection value as an input variable, and also includes vehicle speed dependent processing. The vehicle speed dependent processing is processing of reducing responsivity of a manipulated variable of the actuator with respect to change in the angle detection value in a case in which the vehicle speed is low as compared to a case in which the vehicle speed is high.

Fig.3

**Description**

TECHNICAL FIELD

The present disclosure relates to a control device for an articulated vehicle, a control method for the articulated vehicle, and a control program for the articulated vehicle.

BACKGROUND ART

Patent Document 1 that is listed below, for example, describes a device for controlling traveling of an articulated vehicle using a hitch angle sensor.

Related Art Documents

Patent Documents

Patent Document 1: US Patent No. 10421490

SUMMARY OF THE INVENTION

Problem to be Solved by the Invention

Now, noise is superimposed on detection values of sensors that detect an angle related to steering of the articulated vehicle. When influence of the noise is reflected in control, vibrations are superimposed on control of steered wheels. Accordingly, in a case in which an operating unit that is operated by a driver for steering is mechanically linked to the steered wheels, vibrations that can be sensed by the user are generated in the operating unit.

Means for Solving the Problem

One aspect of the present disclosure provides a control device for an articulated vehicle in which a tractor and a trailer are linked. The trailer is equipped with an operating unit that is mechanically linked to a steered wheel, and an actuator that steers the steered wheel. The control device of the articulated vehicle is configured to execute acquisition processing and steering control processing. The acquisition processing is processing of acquiring vehicle speed and an angle detection value. The angle detection value is a detection value of a value of an angle variable related to steering of the articulated vehicle, and is detected by a sensor. The steering control processing is processing of operating the actuator based on the angle detection value as an input variable, and also includes vehicle speed dependent processing. The vehicle speed dependent processing is processing of reducing responsivity of a manipulated variable of the actuator with respect to change in the angle detection value in a case in which the vehicle speed is low as compared to a case in which the vehicle speed is high.

Another aspect of the present disclosure provides a control method for an articulated vehicle in which a tractor and a trailer are linked. The trailer is equipped with an operating unit that is mechanically linked to a steered wheel, and an actuator that steers the steered wheel. The control method for an articulated vehicle includes executing acquisition processing, and executing steering control processing. The acquisition processing is processing of acquiring vehicle speed and an angle detection value. The angle detection value is a detection value of a value of an angle variable related to steering of the articulated vehicle, and is detected by a sensor. The steering control processing is processing of operating the actuator based on the angle detection value as an input variable, and also includes vehicle speed dependent processing. The vehicle speed dependent processing is processing of reducing responsivity of a manipulated variable of the actuator with respect to change in the angle detection value in a case in which the vehicle speed is low as compared to a case in which the vehicle speed is high.

Another aspect of the present disclosure provides a control program for an articulated vehicle in which a tractor and a trailer are linked. The trailer is equipped with an operating unit that is mechanically linked to a steered wheel, and an actuator that steers the steered wheel. The control program for the articulated vehicle includes a command for causing a computer to execute acquisition processing and steering control processing. The acquisition processing is processing of acquiring vehicle speed and an angle detection value. The angle detection value is a detection value of a value of an angle variable related to steering of the articulated vehicle, and is detected by a sensor. The steering control processing is processing of operating the actuator based on the angle detection value as an input variable, and also includes vehicle speed dependent processing. The vehicle speed dependent processing is processing of reducing responsivity of a manipulated variable of the actuator with respect to change in the angle detection value in a case in which the vehicle speed is low as compared to a case in which the vehicle speed is high.

BRIEF DESCRIPTION OF THE DRAWINGS

[FIG. 1] FIG. 1 is a diagram exemplifying an articulated vehicle according to a first embodiment.
[FIG. 2] FIG. 2 is a block diagram illustrating a configuration of a control system according to the embodiment.
[FIG. 3] FIG. 3 is a flowchart showing a procedure of processing that is executed by a control device according to the embodiment.
[FIG. 4] FIG. 4 is a diagram illustrating a model of the articulated vehicle according to the embodiment.
[FIG. 5] FIG. 5 is a time chart exemplifying time series data of detection values of a sensor according to the embodiment.
[FIG. 6] FIG. 6 is a diagram illustrating a relation between vehicle speed and steering speed necessary for control, according to the embodiment.
[FIG. 7] FIG. 7 is a flowchart showing procedures of processing that is executed by a control device according to a second embodiment.
[FIG. 8] FIG. 8 is a timing chart showing effects of the embodiment.
[FIG. 9] FIG. 9 is a flowchart showing procedures of processing that is executed by a control device according to a fifth embodiment.

MODES FOR CARRYING OUT THE INVENTION

<First Embodiment>

A first embodiment will be described below with reference to the drawings.

"Configuration of Articulated Vehicle"

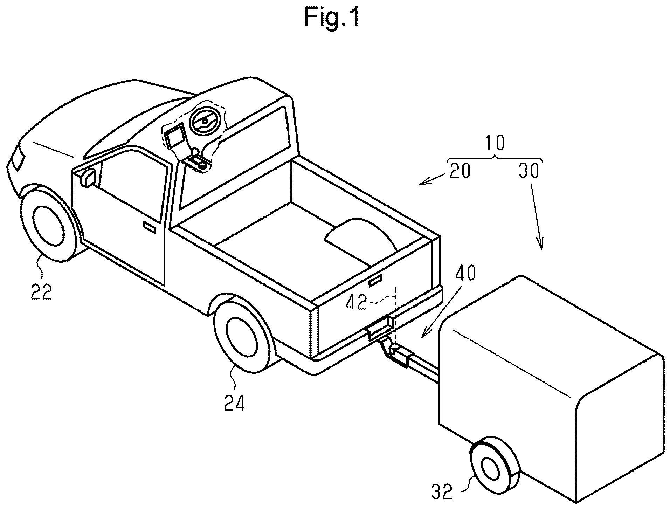

As illustrated in FIG. 1, an articulated vehicle 10 includes a tractor 20 and a trailer 30. The tractor 20 includes front wheels 22 and rear wheels 24. The front wheels 22 include two wheels, which are a right front wheel and a left front wheel, and the rear wheels 24 include two wheels, which are a right rear wheel and a left rear wheel. Also, FIG. 1 exemplifies an enclosed box trailer as the trailer 30. The trailer 30 has wheels 32. The wheels 32 include two wheels, which are a right wheel and a left wheel.

The trailer 30 is linked to a rear portion of the tractor 20 via a ball joint 40. The ball joint 40 is a member that links the trailer 30 to the tractor 20 such that the trailer 30 can rotate about an axis 42. The axis 42 extends in a height direction of the tractor 20.

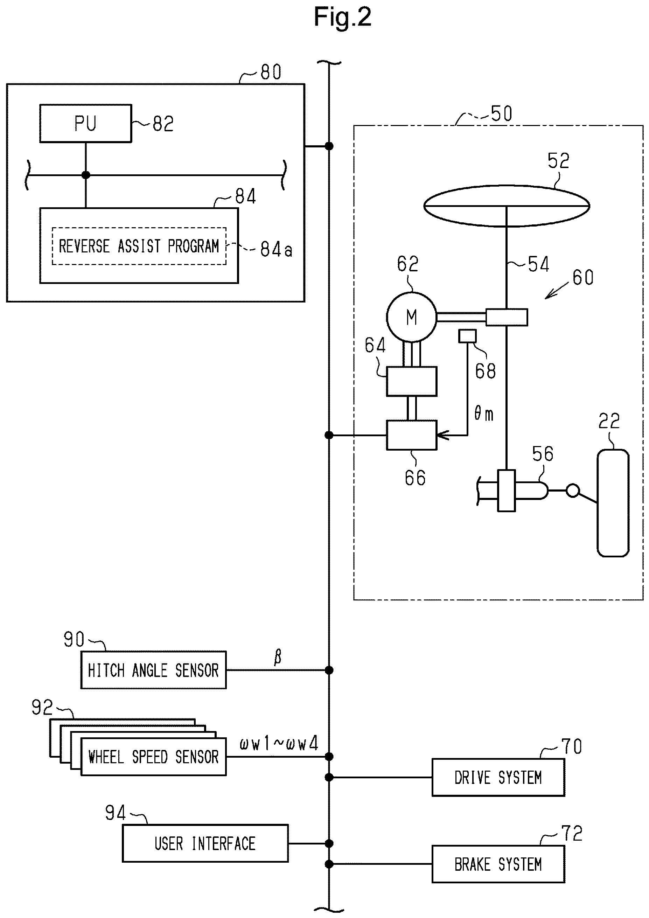

FIG. 2 illustrates part of members that the tractor 20 is equipped with. As illustrated in FIG. 2, a steering wheel 52 in a steering system 50 that is provided in the tractor 20 rotates integrally with a steering shaft 54. The steering wheel 52 corresponds to an operating unit that is mechanically linked to steered wheels. Rotational power of the steering wheel 52 is converted into a steering force for the front wheels 22 via the steering shaft 54 and a rack shaft 56. A steering actuator 60 is mechanically linked to the steering shaft 54. The steering actuator 60 converts power of a motor 62 into rotational power for the steering shaft 54. Output voltage of an inverter 64 is applied to a terminal of the motor 62.

A controller 66 controls torque of the motor 62 in order to control a controlled variable of the front wheels 22, as an object of control. The controlled variable here is a steered angle. The steered angle is a turning angle of tires of the front wheels 22. The controller 66 refers to a rotational angle $\theta m$ of the motor 62 that is detected by a rotational angle sensor 68, in order to control the controlled variable.

The tractor 20 is equipped with a drive system 70. The drive system 70 includes at least one of two devices, which are an internal combustion engine and a rotating electrical machine, as a thrust generating device for the vehicle. The tractor 20 is equipped with a brake system 72. The brake system 72 includes at least one of two devices which are a device that reduces the speed of rotation of the wheels by frictional force, and a device that reduces the speed of rotation of the wheels by converting power of the wheels into electrical energy. Note that the device, which reduces the speed of rotation of the wheels by conversion into electrical energy, may be shared with the rotating electrical machine of the drive system.

The tractor 20 is equipped with an ADAS ECU 80. The ADAS ECU 80 operates the steering system 50, the drive system 70, and the brake system 72 in order to control the controlled variables of the articulated vehicle 10 that is the object of control. The controlled variables are vehicle speed, direction of travel, hitch angle, and so forth. The hitch angle is an angle that is formed between a front-rear direction of the tractor 20 and a front-rear direction of the trailer 30. Note that the drive system 70 may include a drive control device regarding which the internal combustion engine and the rotating electrical machine are objects of control. In this case, "the ADAS ECU 80 operates the drive system 70" means that the ADAS ECU 80 outputs a command signal to the drive control device. Also, the brake system 72 may include a brake control device of which the devices that reduce the speed of rotation of the wheels are objects of control. In this case, "the ADAS ECU 90 operates the brake system 82" means that the ADAS ECU 80 outputs a command signal to the brake control device. Also, "the ADAS ECU 80 operates the steering system 50" means that the ADAS ECU 80 outputs a command signal to the controller 66.

The ADAS ECU 80 references a hitch angle $\beta$ that is detected by a hitch angle sensor 90 in order to control the controlled variable. The hitch angle $\beta$ may take either a positive sign or a negative sign in accordance with an angle that is formed between a direction of travel of the tractor 20 from rear to front thereof and a direction of travel of the trailer 30 from rear to front thereof. For example, the hitch angle $\beta$ may take a positive sign in a case in which the direction of travel of the trailer 30 from rear to front thereof deviates counterclockwise from the direction of travel of the tractor 20 from rear to front thereof by less than 180°. The ADAS ECU 80 also references wheel speeds ww1 to $\omega$w4 that are detected by wheel speed sensors 92. The wheel speeds $\omega$w1 and ww2 are the rotational speed of the right front wheel 22 and the rotational speed of the left front wheel 22, respectively. The wheel speeds ww3 and ww4 are the rotational speed of the right rear wheel 24 and the rotational speed of the left rear wheel 24, respectively.

The ADAS ECU 80 sets control of the controlled variable in response to a state of operation of a user interface 94. The user interface 94 is used to transmit intent of a user to the ADAS ECU 80, such as an intent to select one of the two of automated driving and manual driving, or the like.

The ADAS ECU 80 includes a PU 82 and a storage device 84. The PU 82 is a software processing device including at least one of a CPU, a GPU, a TPU, and so forth. The storage device 84 stores a reverse assist program 84a. The reverse assist program 84a is a program that defines commands to cause the PU 82 to execute reverse assist processing. The reverse assist processing is processing of automatically performing steering processing of the steered wheels when the articulated vehicle 10 is traveling in reverse. The reverse assist program 84a is a program for reducing a burden on a driver due to reverse driving.

That is to say, when the articulated vehicle 10 is traveling in reverse, even when the steered angle of the tractor 20 is the same, behavior of the trailer 30 will change in accordance with the hitch angle $\beta$. Accordingly, reverse control requires advanced driving skills. The reverse assist processing by the reverse assist program 84a is processing of assisting the driver by controlling the steered angle of the tractor 20. Note however, that in the reverse assist processing, instructions to steer the trailer 30 are entrusted to the driver.

"Steering in Reverse Assist Processing"

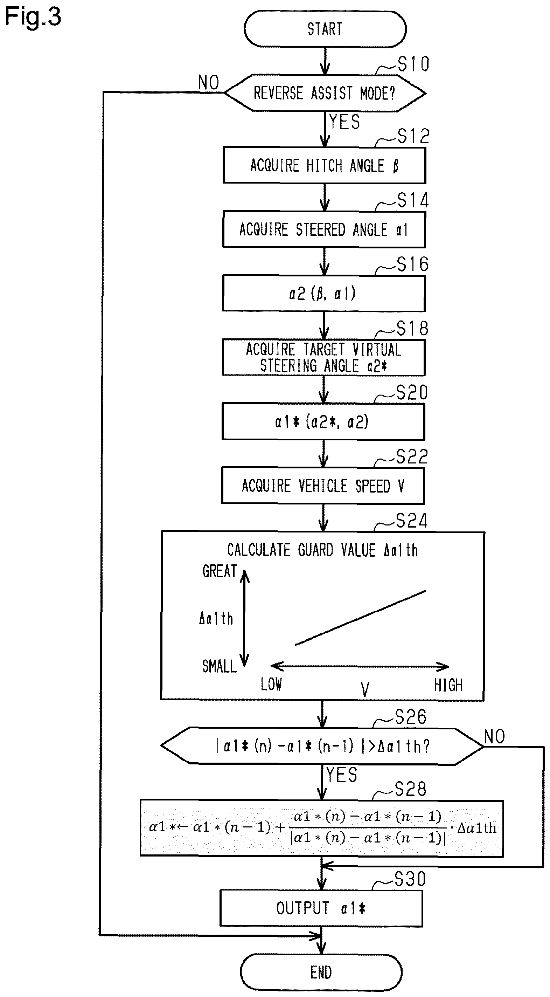

FIG. 3 shows procedures of the reverse assist processing. The processing shown in FIG. 3 is realized by the PU 82 repeatedly executing the reverse assist program 84a in predetermined cycles, for example. Note that in the following description, numbers preceded by the letter "S" represent step numbers of each processing.

In the series of processing shown in FIG. 3, the PU 82 first determines whether a current mode is a reverse assist mode (S10). In a case in which determination is made that the current mode is the reverse assist mode (S10: YES), the PU 82 acquires the hitch angle $\beta$ that is detected by the hitch angle sensor 90 (S12). Also, the PU 82 acquires a steered angle $\alpha$1 that is detected by the steering system 50 (S14). Specifically, the steered angle $\alpha$1 is a value that is calculated by the controller 66 using the rotational angle $\theta$m.

The PU 82 then takes the steered angle $\alpha$1 and the hitch angle $\beta$ as inputs, and calculates a virtual steering angle $\alpha$2 (S16). The virtual steering angle $\alpha$2 is a variable that indicates a direction of travel of a linking point between the trailer 30 and the tractor 20. In other words, this is a variable that indicates the direction of travel of the axis 42 illustrated in FIG. 1. In the present embodiment, as an example, the virtual steering angle $\alpha$2 is defined by an angle that is formed between a direction of travel of the ball joint 40 with respect to the front-rear direction of the trailer 30.

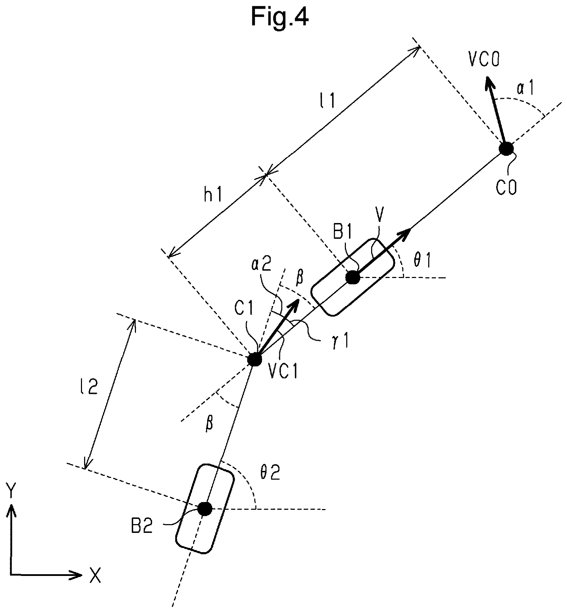

The reason for calculating the virtual steering angle $\alpha$2 from the steered angle $\alpha$1 and the hitch angle $\beta$ will be described here with reference to FIG. 4. FIG. 4 illustrates a model of the articulated vehicle 10 that is used in the present embodiment. In the model illustrated in FIG. 4, a pair of the front wheels 22 of the tractor 20 is deemed to be a single front wheel C0, and also a pair of the rear wheels 24 of the tractor 20 is deemed to be a single rear wheel B1. That is to say, a two-wheel model is employed regarding the tractor 20. Also, a pair of the wheels 32 of the trailer 30 is deemed to be a single wheel B2. An angle that is formed between a line that is determined by the front wheel C0 and a hitch point C1, and a line that is determined by the hitch point C1 and the wheel B2, is the hitch angle $\beta$. The hitch point C1 corresponds to the axis 42 portion in FIG. 1. Also, a front wheel speed VC0, which is speed of the front wheel C0, is a vector of advance in a direction of the steered angle $\alpha$1. The steered angle $\alpha$1 is quantified as an angle that is formed between a direction in which the front wheel C0 advances and the line that is determined by the front wheel C0 and the hitch point C1. A direction of vehicle speed V is parallel to the line that is determined by the front wheel C0 and the hitch point C1. Also, an angle that is formed between the direction of the vehicle speed V and an x direction in FIG. 4 is an angle $\theta$1. Also, an angle that is formed between the line connecting the wheel B2 and the hitch point C1, and the x direction, is an angle $\theta$2. Also, a distance I1 is a length between the front wheel C0 and the rear wheel B1. Also, a distance h1 is a length between the rear wheel B1 and the hitch point C1. A distance l2 is a length between the hitch point C1 and the wheel B2.

According to the above definitions, a direction of a speed VC1 of the hitch point C1 relative to a direction of travel from the wheel B2 to the hitch point C1 is the virtual steering angle $\alpha2$. The virtual steering angle $\alpha2$ is expressed as "-($\beta$ - $\gamma1$)", using an angle $\gamma1$ of the direction of the speed VC1 of the hitch point C1 with respect to a direction of travel from the hitch point C1 to the front wheel C0.

In the model illustrated in FIG. 4, the following Expressions (c1) to (c3) hold when using coordinates (xc0, yc0) of the front wheel C0, coordinates (xb1, yb1) of the rear wheel B1, and coordinates (xc1, yc1) of the hitch point C1.

$$VC0 \cdot \cos\alpha1 = V \dots(c1)$$

$$xc0 = xb1 + l1 \cdot \cos\theta1 \dots(c2)$$

$$xc1 = xb1 - h1 \cdot \cos\theta1 \dots(c3)$$

The following Expression (c4) is obtained using an expression that is obtained by differentiating both sides of the above Expressions (c2) and (c3), and the Expression (c1).

$$h1 \cdot \tan\alpha1 + l1 \cdot \tan\gamma1 = 0 \dots(c4)$$

According to the above Expression (c4), the angle $\gamma1$ can be expressed by the steered angle $\alpha1$. Accordingly, the virtual steering angle $\alpha2$ is expressed by the following Expression (c5).

$$\alpha2 = -\beta - \arctan\{(h1/l1) \cdot \tan(\alpha1)\} \dots(c5)$$

That is to say, the virtual steering angle $\alpha2$ can be found from the hitch angle $\beta$ and the steered angle $\alpha1$. The processing of S16 shown in FIG. 3 may be processing using the above Expression (c5). Also, the processing of S16 may be processing in which the PU 82 uses map data that is stored in the storage device 84 to perform map computation of the virtual steering angle $\alpha2$. The map data is data in which the hitch angle $\beta$ and the steered angle $\alpha1$ are input variables, and also the virtual steering angle $\alpha2$ is an output variable.

Now, the map data is a data set of discrete values of the input variables and values of the output variable corresponding to each of the values of the input variables. Also, the map computation can be processing that, in a case in which the values of the input variables agree with any of the values of the input variables in the map data, takes a corresponding value of the output variable in the map data as a computation result. Also, the map computation can be processing that, in a case in which the values of the input variables do not agree with any of the values of the input variables in the map data, takes a value that is obtained by interpolating a plurality of values of the output variable that are included in the map data as a computation result. Also, alternatively, the map computation may be processing that, in a case in which the values of the input variables do not agree with any of the values of the input variables in the map data, takes the value of the output variable in the map data that corresponds to a closest value out of values of a plurality of the input variables that are included in the map data, as a calculation result.

Returning to FIG. 3, the PU 82 acquires a target virtual steering angle $\alpha2^*$ that is input to the user interface 94 (S18). The target virtual steering angle $\alpha2^*$ is a target value of the virtual steering angle $\alpha2$. The target virtual steering angle $\alpha2^*$ is a variable that indicates an instruction that is given by the driver regarding the steering of the trailer 30.

Next, the PU 82 calculates a target steered angle $\alpha1^*$ as a manipulated variable of feedback control in which the virtual steering angle $\alpha2$ is a controlled variable and also the target virtual steering angle $\alpha2^*$ is a target value of the controlled variable (S20). Now, the feedback control may be, for example, processing in which an output value of a proportional element, which takes, as input, a difference between the target virtual steering angle $\alpha2^*$ and the virtual steering angle $\alpha2$, is the target steered angle $\alpha1^*$. Also, for example, the feedback control may be processing in which a sum of an output value of a proportional element and an output value of an integral element, which take as input a value corresponding to a difference between the target virtual steering angle $\alpha2^*$ and the virtual steering angle $\alpha2$, is the target steered angle $\alpha1^*$. Also, for example, the feedback control may be processing in which a sum of an output value of a proportional element and an output value of a derivative element, which take as input a value corresponding to a difference between the target virtual steering angle $\alpha2^*$ and the virtual steering angle $\alpha2$, is the target steered angle $\alpha1^*$. Also, for example, the feedback control may be processing in which a sum of an output value of a proportional element, an output value of a derivative element, and an output value of an integral element, which take as input a value corresponding to a difference between the target virtual steering angle α2* and the virtual steering angle α2, is the target steered angle α1*.

Next, the PU 82 acquires the vehicle speed V (S22). The vehicle speed V is calculated by the PU 82 using at least one of the four wheel speeds ww1 to ωw4. Note that the processing in S12, S14, and S22 corresponds to acquisition processing. Also, angle detection values correspond to the hitch angle β and the steered angle α1. The PU 82 then calculates a guard value Δα1th of a magnitude of rate of change of the target steered angle α1* in accordance with the vehicle speed V (S24). Specifically, the PU 82 variably sets the guard value Δα1th in accordance with the vehicle speed V, on the condition that the guard value Δα1th when the vehicle speed V is high is no less than the guard value Δα1th when the vehicle speed V is low. This may be processing in which the PU 82 performs map computation to determine the guard value Δα1th in a state in which map data is stored in the storage device 84, for example. Here, the map data is data in which the vehicle speed V is an input variable and also the guard value Δα1th is an output variable. This map data includes values that are different from each other, for the guard value Δα1th.

Note that in the description "B is changed in accordance with A, on the condition that B when A is great is no smaller than B when A is small", the case in which A is great and the case in which A is small mean a relative relation in magnitude when comparing the two. For example, "a case in which A is great" corresponds to a case in which "A is a first value", and "a case in which A is small" corresponds to "a case in which A is a second value that is smaller than the first value". This also means that, according to the above description, depending on the settings of the first value and the second value, B in a case in which A is the first value may be greater than B in a case in which A is the second value. Also, the above description means that B is changed in accordance with A, such that A in a case in which B is great, is greater than A in a case in which B is small.

Next, the PU 82 determines whether an absolute value of difference between the current value "α1*(n)" of the target steered angle α1* and the last-time value "α1*(n-1)" is greater than a guard value Δα1th (S26). In a case of determining that the absolute value is greater than the guard value Δα1th (S26: YES), the PU82 sets the target steered angle α1* to a value of which an amount of change from a last-time value is the guard value Δα1th and also which is closest to the value that is calculated by the processing of S20 (S28). The PU 82 then outputs the target steered angle α1* to the controller 66 (S30). That is to say, the PU 82 operates the steering system 50 such that the steered angle α1 nears the target steered angle α1*.

Note that the PU 82 ends the series of processing shown in FIG. 3 for the time being, in a case in which the processing of S30 is completed, or in a case in which a negative determination is made in the processing of S10. Note that the processing in steps S16 to S30 corresponds to steering control processing. Also, the processing in steps S24 to S28 corresponds to vehicle speed dependent processing.

"Functions and Effects of Present Embodiment"

Noise is superimposed on the hitch angle β and the steered angle α1, which are values in accordance with the detection values of the sensors of the angle variables related to steering of the articulated vehicle 10.

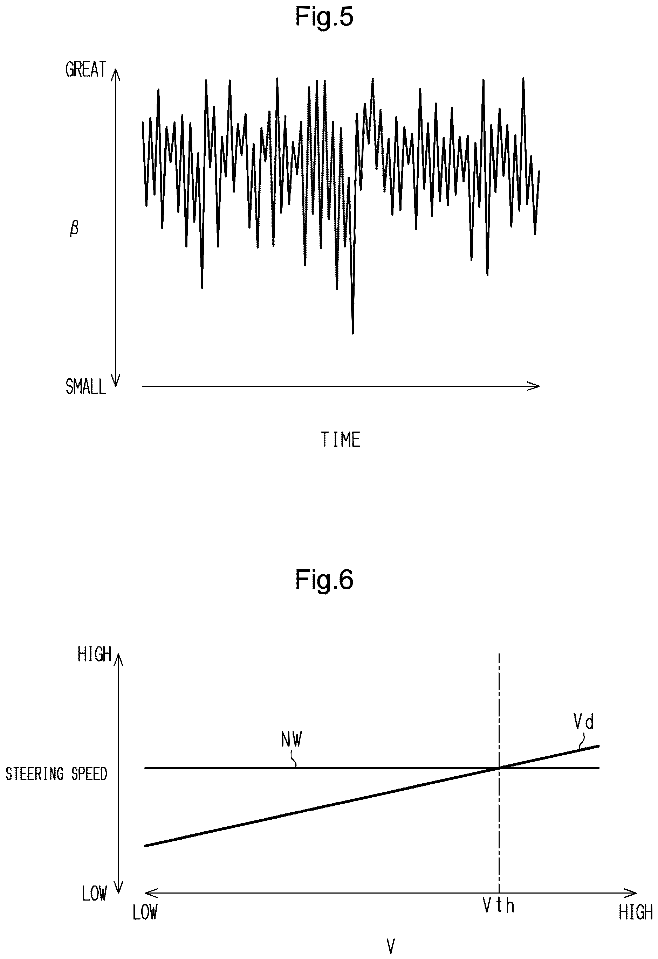

FIG. 5 shows temporal transition of the hitch angle β. As shown in FIG. 5, noise is superimposed on the hitch angle β, and accordingly the value fluctuates up and down. FIG. 6 shows a relation between the steering speed, which is a speed of steering that is necessary for control, and the vehicle speed V. As shown in FIG. 6, steering speed Vd that is necessary for control increases as the vehicle speed V increases. The reason is as follows.

That is to say, according to the model expression of FIG. 4, a time derivative of the hitch angle β is expressed by the following Expression (c6).

$$d\beta/dt = (V/l2)\cdot\sin\beta + \{V/(l1\cdot l2)\}\cdot\{l2 + h1\cdot\cos\beta\}\cdot\tan\alpha1 \ ...(c6)$$

According to Expression (c6), the time derivative of the hitch angle β is proportional to the vehicle speed V.

Also, when both sides of the above Expression (c5) are differentiated with respect to time, the time derivative of the virtual steering angle α2 becomes the sum of the time derivative of the hitch angle β and a term including the time derivative of the steered angle α1. Accordingly, the time derivative of the steered angle α1 can be deemed as being the sum of a term that is proportional to the time derivative of the virtual steering angle α2 and a term that is proportional to the time derivative of the hitch angle. Now, the proportionality coefficient is dependent on the steered angle α1. Thus, according to the above Expression (c6), the time derivative of the steered angle α1 is also proportional to the vehicle speed V. Further, the term that is proportional to the time derivative of the virtual steering angle α2 can be deemed as being the sum of a term that is proportional to the time derivative of the steered angle α1 and a term that is proportional to the time derivative of the hitch angle. Thus, according to the above Expression (c6), the time derivative of the virtual steering angle α2 is also proportional to the vehicle speed V.

The speed of steering is in accordance with the time derivative of the steered angle α1, the time derivative of the hitch angle β, or the time derivative of the virtual steering angle α2. Accordingly, the steering speed Vd that is necessary for control increases as the vehicle speed V increases.

FIG. 6 also shows noise NW originating in the detected values of the sensors. As shown in FIG. 6, the steering speed Vd that is necessary for control is smaller than the noise NW component until the vehicle speed V reaches a threshold value Vth. Note that while the vertical axis in FIG. 6 represents speed for the sake of convenience, more accurately, this means that the higher on the vertical axis, the higher the frequency is.

As shown in FIG. 6, in a case in which the vehicle speed V is low, influence of noise on the hitch angle $\beta$ and the steered angle $\alpha 1$ may cause the target steered angle $\alpha 1^*$ that is calculated by the processing in S20 to change unnecessarily abruptly. In a case in which the target steered angle $\alpha 1^*$ used for control fluctuates frequently due to the influence of noise, torque of the motor 62 for controlling the steered angle $\alpha 1$ to the target steered angle $\alpha 1^*$ fluctuates frequently. When the torque of the motor 62 fluctuates at a high frequency, vibrations occur at the steering wheel 52.

Accordingly, the PU 52 limits the magnitude of the rate of change of the target steered angle $\alpha 1^*$ that is used for control to no greater than the guard value $\Delta\alpha 1$th. This enables abrupt and frequent fluctuation in the target steered angle $\alpha 1^*$, due to noise in the detection values of the hitch angle $\beta$ and the rotational angle $\theta m$, to be suppressed. Thus, vibrations occurring in the steering wheel 52 when the articulated vehicle 10 is being driven at extremely low speeds can be suppressed.

<Second Embodiment>

A second embodiment will be described below with reference to the drawings, focusing on differences with respect to the first embodiment.

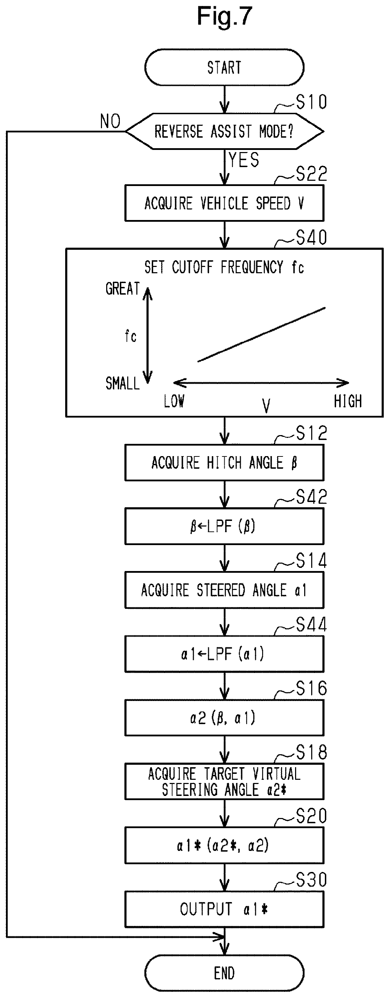

FIG. 7 shows procedures of the reverse assist processing according to the present embodiment. The processing shown in FIG. 7 is realized by the PU 82 repeatedly executing the reverse assist program 84a in predetermined cycles, for example. Note that in FIG. 7, processing corresponding to the processing shown in FIG. 3 is denoted by the same step signs, for the sake of convenience.

In the series of processing shown in FIG. 7, in a case in which determination is made that the current mode is the reverse assist mode (S10: YES), the PU 82 acquires the vehicle speed V (S22). The PU 82 then sets a cutoff frequency fc of a low-pass filter, which will be described later (S40). The PU 82 sets the cutoff frequency fc in accordance with the vehicle speed V, on the condition that the cutoff frequency fc in a case in which the vehicle speed V is low is no greater than the cutoff frequency fc in a case in which the vehicle speed V is high. This can be realized by, for example, the PU 82 performing map computation of the cutoff frequency fc, in a state in which map data is stored in the storage device 84. The map data is data in which the vehicle speed V is an input variable and also the cutoff frequency fc is an output variable. The map data includes values that are different from each other as the values of the output variable.

The PU 82 then performs filtering on the hitch angle $\beta$ that is acquired in the processing of S12, using the low-pass filter with the cutoff frequency fc (S42). Also, the PU 82 performs filtering on the steered angle $\alpha 1$ that is acquired in the processing of S14, using the low-pass filter with the cutoff frequency fc (S44).

The PU 82 then executes the processing of S16 to S20 and S30. Note that the hitch angle $\beta$ and the steered angle $\alpha 1$ in the processing of S16 are values that have been subjected to low-pass filtering in the processing of S42 and S44.

The PU 82 ends the series of processing shown in FIG. 7 for the time being, in a case in which the processing of S30 is completed, or in a case in which a negative determination is made in the processing of S10. Note that the processing of S40, S42, S44, S16 to S20, and S30 corresponds to steering control processing. Also, the processing in steps S40, S42, and S44 corresponds to vehicle speed dependent processing.

"Functions and Effects of Present Embodiment"

The PU 82 calculates the virtual steering angle $\alpha 2$ using the hitch angle $\beta$ and the steered angle $\alpha 1$ that have been subjected to the low-pass filtering. The target steered angle $\alpha 1^*$ is then calculated as a manipulated variable of feedback control, in which the virtual steering angle $\alpha 2$ is a controlled variable and also the target virtual steering angle $\alpha 2^*$ is a target value of the controlled variable. Here, the hitch angle $\beta$ and the steered angle $\alpha 1$ are subjected to low-pass filtering, and accordingly the influence of noise is suppressed. Thus, the virtual steering angle $\alpha 2$ is suppressed from greatly fluctuating due to noise. Accordingly, fluctuations in the target steered angle $\alpha 1^*$ due to the influence of noise can be suppressed.

In particular, the higher the vehicle speed V is, the higher the PU 82 sets the cutoff frequency fc to be. In a case in which the vehicle speed V is high, the rate of change of the steered angle $\alpha 1$ necessary for control also becomes great. Thus, according to the present embodiment, a good compromise between suppressing the influence of noise and improving responsivity of the control of the virtual steering angle $\alpha 2$.

In particular, in a case in which low-pass filtering is performed, controllability of the virtual steering angle $\alpha 2$ can be improved in a case in which a stopped state of the articulated vehicle 10 cannot be determined with high precision. In other words, in a case in which the precision of determining the stopped state is low, there is a risk that the articulated vehicle 10 will be erroneously determined to be in a stopped state in a case of traveling at an extremely slow speed. In a case in which control is stopped when in a stopped state, control of the virtual steering angle $\alpha 2$ cannot be executed.

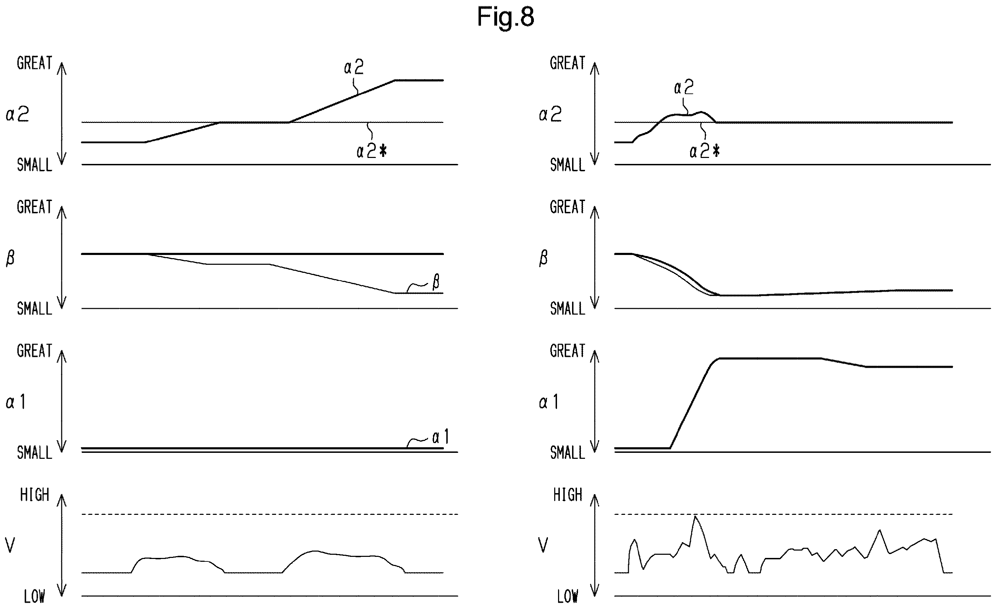

The left side of FIG. 8 shows transition in the virtual steering angle $\alpha 2$, the hitch angle $\beta$, the steered angle $\alpha 1$, and the vehicle speed V, in a case in which the hitch angle $\beta$ and the steered angle $\alpha 1$ are fixed to the values immediately before the articulated vehicle 10 is stopped, in a case of erroneously determining that the articulated vehicle 10 is stopped. In this case, the PU 82 recognizes that the virtual steering angle $\alpha 2$, the hitch angle $\beta$, and the steered angle $\alpha 1$ are maintained at the values immediately prior to the stopped determination, and accordingly cannot control the virtual steering angle $\alpha 2$.

On the other hand, the right side of FIG. 8 shows the case of the present embodiment. In this case, the hitch angle $\beta$ and the steered angle $\alpha 1$ that have been subjected to the low-pass filtering change, and accordingly the virtual steering angle $\alpha 2$ also changes. Accordingly, control for bringing the virtual steering angle $\alpha 2$ nearer to the target virtual steering angle $\alpha 2^*$ can be realized.

<Third Embodiment>

A third embodiment will be described below with reference to the drawings, focusing on differences with respect to the first embodiment.

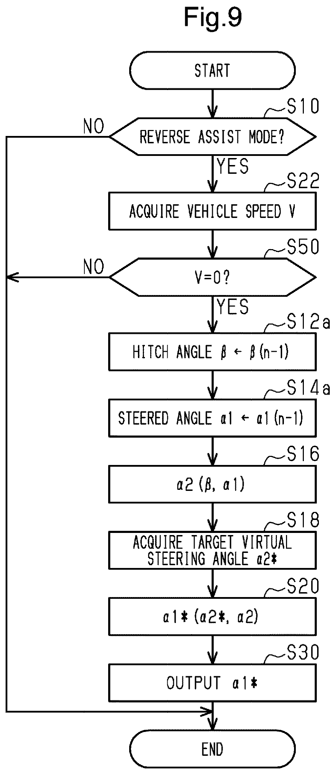

FIG. 9 shows procedures of the reverse assist processing according to the present embodiment. The processing shown in FIG. 9 is realized by the PU 82 repeatedly executing the reverse assist program 84a in predetermined cycles, for example. Note that in FIG. 9, processing corresponding to the processing shown in FIG. 3 is denoted by the same step signs, for the sake of convenience.

In the series of processing shown in FIG. 9, in a case of completing the processing of S10 and S22, the PU 82 determines whether the vehicle speed V is zero (S50). In a case of determining that the vehicle speed V is zero (S50: YES), the PU 82 substitutes the last-time value "$\beta(n-1)$" into the hitch angle $\beta$ to be used this time (S12a). Also, the PU 82 substitutes the last-time value "$\alpha 1(n-1)$" into the steered angle $\alpha 1$ to be used this time (S14a). The PU 82 then executes the processing of S16 to S20 and S30. Note that the processing of S50 corresponds to determination processing. Also, the processing of S12a and S14a corresponds to holding processing.

The PU 82 ends the series of processing shown in FIG. 9 for the time being, in a case in which the processing of S30 is completed, or in a case in which a negative determination is made in the processing of S10. Now, in a case of a negative determination being made in the processing of S50, the PU 82 can execute the processing shown in FIG. 3 or FIG. 7. Note that processing of S50, S12a, S14a, S16 to S20, and S30 corresponds to steering control processing. Also, the processing in steps S40, S42, and S44 corresponds to vehicle speed dependent processing.

"Functions and Effects of Present Embodiment"

When determining that the vehicle speed V is zero, the PU 82 holds the hitch angle $\beta$ and the steered angle $\alpha 1$ at the values immediately prior to the vehicle speed V becoming zero. Accordingly, the virtual steering angle $\alpha 2$ that is used in the processing of S20 is also held at the value immediately prior to the vehicle speed V becoming zero. This suppresses the target steered angle $\alpha 1^*$ from fluctuating due to the influence of noise that is superimposed on the hitch angle $\beta$ and steered angle $\alpha 1$ that are detected each time. Accordingly, in a state in which the articulated vehicle 10 is stopped, fluctuations in the torque of the motor 62 can be suppressed. When the torque that is applied to the steering wheel 52 fluctuates in a state in which the articulated vehicle 10 is stopped, the user is particularly likely to feel that something is amiss. In contrast, according to the present embodiment, such problems can be suppressed from occurring.

<Other Embodiments>

Note that the present embodiment can be carried out modified as follows. The present embodiment and the following modifications can be carried out combined with each other insofar as no technical contradictions arise.

"Regarding Steering Control Processing"

- The steering control processing is not limited to processing in which the manipulated variable of the feedback control, in which the virtual steering angle $\alpha 2$ is the controlled variable and also the target virtual steering angle $\alpha 2^*$ is the target value of the controlled variable, is set to the target steered angle $\alpha 1^*$. For example, the steering control processing may be processing in which a sum of a manipulated variable of feedback control in which the virtual steering angle $\alpha 2$ is the controlled variable and a manipulated variable of open loop control in which the virtual steering angle $\alpha 2$ is the controlled variable, is the target steered angle $\alpha 1^*$.
- The steering control processing is not limited to processing in which the manipulated variable of control, in which the

virtual steering angle $\alpha2$ is the controlled variable, is the target steered angle $\alpha1^*$. The steering control processing may be, for example, processing in which a manipulated variable of control, in which the hitch angle $\beta$ is a controlled variable, is the target steered angle $\alpha1^*$. Now, the PU 82 can set the target value of the hitch angle $\beta$ based on the above Expression (c5) from the target virtual steering angle $\alpha2^*$ and the steered angle $\alpha1$.

- The ADAS ECU 80 may output a command value regarding the torque of the motor 62, for example. In this case, the PU 82 may set the manipulated variable of the feedback control, in which the steered angle $\alpha1$ is the controlled variable and also the target steered angle $\alpha1^*$ is the target value of the controlled variable, as the command value of the torque of the motor 62. Also, for example, the PU 82 may set the torque command value of motor 62 to a sum of a manipulated variable of feedback control in which the steered angle $\alpha1$ is the controlled variable and a manipulated variable of open loop control in which the steered angle $\alpha1$ is the controlled variable.

"Regarding Vehicle Speed Dependent Processing"

- As described in the section "Regarding Steering Control Processing", for example, in a case in which the ADAS ECU 80 outputs a torque command value for the motor 62, the vehicle speed dependent processing may be processing that makes the magnitude of the rate of change of the command value to be smaller in a case in which the vehicle speed V is low as compared to a case in which the vehicle speed V is high.
- As described in the section "Regarding Steering Control Processing", for example, in a case in of setting the manipulated variable of feedback control in which the steered angle $\alpha1$ is the controlled variable as the torque command value, the output value of the processing of S44 is preferably used for the steered angle $\alpha1$ as the feedback controlled variable.
- Although FIG. 7 shows an example in which filtering is performed on both the hitch angle $\beta$ and the steered angle $\alpha1$, this is not restrictive. For example, filtering may be performed on just one of the two of the hitch angle $\beta$ and the steered angle $\alpha1$.

"Regarding Sensor Detecting Value of Angle Variable"

- The sensor for detecting the steered angle is not limited to the rotational angle sensor 68. The sensor for detecting the steered angle may be, for example, a steering sensor that detects a rotational angle of the steering shaft 54. Also, for example, the sensor for detecting the steered angle may be a linear position sensor that detects amount of displacement of the rack shaft 56 in an axial direction.

"Regarding Actuator"

- The actuator does not necessarily have to be the steering actuator 60. The actuator may be, for example, a concentric type actuator in which a rotation axis of the motor 62 is disposed in parallel to the rack shaft 56.

"Regarding Control Device"

- The control device is not limited to an arrangement that is equipped with the PU 82 and the storage device 84, and that executes software processing. For example, the control device may include a dedicated hardware circuit such as an ASIC or the like, for example, that executes at least part of the processing that is executed in the above embodiments. That is to say, the control device can be equipped with a processing circuit that includes any of the following configurations (a) to (c). (a) A processing circuit including a processing device that executes all of the above processing according to a program, and a program storage device such as a storage device or the like that stores the program. (b) A processing circuit including a processing device that executes part of the above processing according to a program, a program storage device, and a dedicated hardware circuit that executes the remainder of the processing. (c) A processing circuit including a dedicated hardware circuit that executes all of the above processing. Now, there may be a plurality of software execution devices that includes a processing device and a program storage device, and a plurality of dedicated hardware circuits.

"Regarding Computer"

- A computer is not limited to the PU 82 that is installed in the vehicle. For example, the processing of S10 to S22 and S30 shown in FIG. 3 may be executed by the PU 82, and also the processing of S24 to S28 may be executed by a mobile terminal of the user.

"Regarding Operating Unit"

- The operating unit is not limited to the steering wheel 52. For example, this may be a joystick.

"Regarding Vehicle"

- The articulated vehicle is not limited to the vehicle that is exemplified in FIG. 1.

**Claims**

1. A control device for an articulated vehicle in which a tractor and a trailer are linked, wherein:

   the trailer is equipped with an operating unit that is mechanically linked to a steered wheel, and an actuator that steers the steered wheel;
   the control device is configured to execute acquisition processing and steering control processing;
   the acquisition processing is processing of acquiring vehicle speed and an angle detection value;
   the angle detection value is a detection value of a value of an angle variable related to steering of the articulated vehicle, and is detected by a sensor;
   the steering control processing is processing of operating the actuator based on the angle detection value as an input variable, and also includes vehicle speed dependent processing; and
   the vehicle speed dependent processing is processing of reducing responsivity of a manipulated variable of the actuator with respect to change in the angle detection value in a case in which the vehicle speed is low as compared to a case in which the vehicle speed is high.

2. The control device for an articulated vehicle according to claim 1, wherein:

   the steering control processing is processing of operating the actuator in accordance with a manipulated variable for controlling a predetermined controlled variable related to steering of the articulated vehicle to a target value of the predetermined controlled variable; and
   the vehicle speed dependent processing is processing of limiting an upper limit value of magnitude of rate of change in the manipulated variable of the actuator to a value that is smaller in the case in which the vehicle speed is low as compared to the case in which the vehicle speed is high.

3. The control device for an articulated vehicle according to claim 2, wherein:

   the predetermined controlled variable is a virtual steering angle;
   the virtual steering angle is a variable indicating a direction of travel of a linking point of the trailer and the tractor;
   the steering control processing is processing of operating the actuator in response to a manipulated variable in feedback control in which the virtual steering angle is a controlled variable;
   the control device is configured to execute virtual steering angle calculation processing; and
   the virtual steering angle calculation processing is processing of calculating the virtual steering angle based on the angle detection value as an input variable.

4. The control device for an articulated vehicle according to claim 2, wherein the manipulated variable is a target value of a steered angle of the steered wheel.

**5.** The control device for an articulated vehicle according to claim 1, wherein:

the steering control processing is processing that includes filtering and also is processing of operating the actuator in response to output of the filtering;

the filtering is processing of removing high frequency components of the angle detection value; and

the vehicle speed dependent processing is processing in which a lower limit value of frequency components to be removed by the filtering is set to be smaller in the case in which the vehicle speed is low as compared to the case in which the vehicle speed is high.

**6.** The control device for an articulated vehicle according to claim 1, wherein:

the vehicle speed dependent processing includes determination processing and holding processing;

the determination processing is processing of determining whether the articulated vehicle is in a stopped state; and

the holding processing is processing of setting the angle detection value for setting the manipulated variable of the actuator to a holding state in a case in which the stopped state is determined.

**7.** A control method for an articulated vehicle in which a tractor and a trailer are linked, wherein:

the trailer is equipped with an operating unit that is mechanically linked to a steered wheel, and an actuator that steers the steered wheel;

the control method for an articulated vehicle includes executing acquisition processing, and executing steering control processing;

the acquisition processing is processing of acquiring vehicle speed and an angle detection value;

the angle detection value is a detection value of a value of an angle variable related to steering of the articulated vehicle, and is detected by a sensor;

the steering control processing is processing of operating the actuator based on the angle detection value as an input variable, and also includes vehicle speed dependent processing; and

the vehicle speed dependent processing is processing of reducing responsivity of a manipulated variable of the actuator with respect to change in the angle detection value in a case in which the vehicle speed is low as compared to a case in which the vehicle speed is high.

**8.** A control program for an articulated vehicle in which a tractor and a trailer are linked, wherein:

the trailer is equipped with an operating unit that is mechanically linked to a steered wheel, and an actuator that steers the steered wheel;

the control program for the articulated vehicle includes a command for causing a computer to execute acquisition processing and steering control processing;

the acquisition processing is processing of acquiring vehicle speed and an angle detection value;

the angle detection value is a detection value of a value of an angle variable related to steering of the articulated vehicle, and is detected by a sensor;

the steering control processing is processing of operating the actuator based on the angle detection value as an input variable, and also includes vehicle speed dependent processing; and

the vehicle speed dependent processing is processing of reducing responsivity of a manipulated variable of the actuator with respect to change in the angle detection value in a case in which the vehicle speed is low as compared to a case in which the vehicle speed is high.

Fig.1

# Fig.2

HITCH ANGLE SENSOR — 90

β

WHEEL SPEED SENSOR — 92

ωw1~ωw4

USER INTERFACE — 94

PU — 82

REVERSE ASSIST PROGRAM — 84a — 84

— 80

— 50

52

54

60

62

M

64

68

θm

66

56

22

DRIVE SYSTEM — 70

BRAKE SYSTEM — 72

## Fig.3

START

~S10

REVERSE ASSIST MODE? — NO

YES

~S12

ACQUIRE HITCH ANGLE $\beta$

~S14

ACQUIRE STEERED ANGLE $\alpha 1$

~S16

$\alpha 2 (\beta, \alpha 1)$

~S18

ACQUIRE TARGET VIRTUAL STEERING ANGLE $\alpha 2*$

~S20

$\alpha 1* (\alpha 2*, \alpha 2)$

~S22

ACQUIRE VEHICLE SPEED V

~S24

CALCULATE GUARD VALUE $\Delta \alpha 1 th$

GREAT

$\Delta \alpha 1 th$

SMALL

LOW — V — HIGH

~S26

$|\alpha 1*(n) - \alpha 1*(n-1)| > \Delta \alpha 1 th$? — NO

YES

~S28

$$\alpha 1* \leftarrow \alpha 1*(n-1) + \frac{\alpha 1*(n) - \alpha 1*(n-1)}{|\alpha 1*(n) - \alpha 1*(n-1)|} \cdot \Delta \alpha 1 th$$

~S30

OUTPUT $\alpha 1*$

END

# Fig.4

# Fig.5

# Fig.6

# Fig.7

```
                    ┌──────────────┐
                    │    START     │
                    └──────┬───────┘
                           │              ～S10
         NO      ╱─────────▼──────────╲
       ┌─────────  REVERSE ASSIST MODE?
       │         ╲────────────────────╱
       │                   │ YES
       │                   ▼              ～S22
       │         ┌────────────────────────┐
       │         │  ACQUIRE VEHICLE SPEED V │
       │         └───────────┬────────────┘
       │                     ▼            ～S40
       │    ┌────────────────────────────────────┐
       │    │        SET CUTOFF FREQUENCY fc       │
       │    │  GREAT ▲                             │
       │    │        │              ╱              │
       │    │    fc  │          ╱                  │
       │    │        │      ╱                      │
       │    │  SMALL ▼  ╱                          │
       │    │        ◄──────────────────►          │
       │    │       LOW      V      HIGH           │
       │    └────────────────┬───────────────────┘
       │                     ▼            ～S12
       │         ┌────────────────────────┐
       │         │   ACQUIRE HITCH ANGLE β │
       │         └───────────┬────────────┘
       │                     ▼            ～S42
       │         ┌────────────────────────┐
       │         │       β←LPF (β)         │
       │         └───────────┬────────────┘
       │                     ▼            ～S14
       │         ┌────────────────────────┐
       │         │  ACQUIRE STEERED ANGLE α1 │
       │         └───────────┬────────────┘
       │                     ▼            ～S44
       │         ┌────────────────────────┐
       │         │      α1←LPF (α1)        │
       │         └───────────┬────────────┘
       │                     ▼            ～S16
       │         ┌────────────────────────┐
       │         │       α2 (β, α1)        │
       │         └───────────┬────────────┘
       │                     ▼            ～S18
       │         ┌────────────────────────┐
       │         │  ACQUIRE TARGET VIRTUAL │
       │         │  STEERING ANGLE α2*     │
       │         └───────────┬────────────┘
       │                     ▼            ～S20
       │         ┌────────────────────────┐
       │         │      α1* (α2*, α2)      │
       │         └───────────┬────────────┘
       │                     ▼            ～S30
       │         ┌────────────────────────┐
       │         │       OUTPUT α1*        │
       │         └───────────┬────────────┘
       │                     │
       └─────────────────────┤
                             ▼
                    ┌──────────────┐
                    │     END      │
                    └──────────────┘
```

17

Fig.8

EP 4 663 517 A1

# Fig.9

```
        ┌──────────────┐
        │    START     │
        └──────┬───────┘
               │          ╭─ S10
        ╱──────▼────────────╲
  NO   ╱  REVERSE ASSIST MODE? ╲
◄──────╲                      ╱
        ╲─────────┬──────────╱
               │ YES
               │          ╭─ S22
        ┌──────▼───────────┐
        │ ACQUIRE VEHICLE SPEED V │
        └──────┬───────────┘
               │          ╭─ S50
        ╱──────▼────────╲
  NO   ╱      V=0?       ╲
◄──────╲                 ╱
        ╲───────┬───────╱
               │ YES
               │          ╭─ S12a
        ┌──────▼──────────┐
        │ HITCH ANGLE β ← β(n-1) │
        └──────┬──────────┘
               │          ╭─ S14a
        ┌──────▼──────────┐
        │ STEERED ANGLE α1 ← α1(n-1) │
        └──────┬──────────┘
               │          ╭─ S16
        ┌──────▼──────────┐
        │    α2 (β, α1)    │
        └──────┬──────────┘
               │          ╭─ S18
        ┌──────▼──────────┐
        │ ACQUIRE TARGET VIRTUAL │
        │  STEERING ANGLE α2*    │
        └──────┬──────────┘
               │          ╭─ S20
        ┌──────▼──────────┐
        │   α1* (α2*, α2)  │
        └──────┬──────────┘
               │          ╭─ S30
        ┌──────▼──────────┐
        │    OUTPUT α1*    │
        └──────┬──────────┘
               │
        ┌──────▼───────┐
        │     END      │
        └──────────────┘
```

## INTERNATIONAL SEARCH REPORT

| International application No. |
|---|
| **PCT/JP2024/004352** |

| A. | CLASSIFICATION OF SUBJECT MATTER |
|---|---|

*B62D 6/00*(2006.01)i; *B62D 13/06*(2006.01)i; *B62D 101/00*(2006.01)n
FI:   B62D6/00; B62D13/06; B62D101:00

According to International Patent Classification (IPC) or to both national classification and IPC

| B. | FIELDS SEARCHED |
|---|---|

Minimum documentation searched (classification system followed by classification symbols)

B62D6/00; B62D13/06; B62D101/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2020-179831 A (JTEKT CORP.) 05 November 2020 (2020-11-05)<br>entire text, all drawings | 1-8 |
| A | JP 2020-001631 A (AISIN SEIKI KABUSHIKI KAISHA) 09 January 2020 (2020-01-09)<br>entire text, all drawings | 1-8 |
| A | US 2021/0039632 A1 (HYUNDAI MOTOR COMPANY) 11 February 2021 (2021-02-11)<br>entire text, all drawings | 1-8 |
| A | US 2021/0261131 A1 (FORD GLOBAL TECHNOLOGIES, LLC) 26 August 2021 (2021-08-26)<br>entire text, all drawings | 1-8 |
| A | US 2016/0031482 A1 (FORD GLOBAL TECHNOLOGIES, LLC) 04 February 2016 (2016-02-04)<br>entire text, all drawings | 1-8 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/004352**

### C. DOCUMENTS CONSIDERED TO BE RELEVANT

| Category* | Citation of document, with indication, where appropriate, of the relevant passages | Relevant to claim No. |
|---|---|---|
| P, A | WO 2023/223837 A1 (JTEKT CORP.) 23 November 2023 (2023-11-23) entire text, all drawings | 1-8 |

## INTERNATIONAL SEARCH REPORT
### Information on patent family members

International application No.

**PCT/JP2024/004352**

| Patent document cited in search report | | | Publication date (day/month/year) | Patent family member(s) | | | Publication date (day/month/year) |
|---|---|---|---|---|---|---|---|
| JP | 2020-179831 | A | 05 November 2020 | US | 2020/0339187 | A1 | |
| | | | | entire text, all drawings | | | |
| | | | | EP | 3730383 | A1 | |
| | | | | CN | 111845914 | A | |
| JP | 2020-001631 | A | 09 January 2020 | US | 2020/0001922 | A1 | |
| | | | | entire text, all drawings | | | |
| US | 2021/0039632 | A1 | 11 February 2021 | DE | 102020102479 | A1 | |
| | | | | KR | 10-2021-0018731 | A | |
| | | | | CN | 112339740 | A | |
| US | 2021/0261131 | A1 | 26 August 2021 | DE | 102021103652 | A1 | |
| US | 2016/0031482 | A1 | 04 February 2016 | GB | 2531108 | A | |
| | | | | DE | 102015112001 | A1 | |
| | | | | CN | 105313963 | A | |
| WO | 2023/223837 | A1 | 23 November 2023 | JP | 2023-170854 | A | |

Form PCT/ISA/210 (patent family annex) (July 2022)

22

**EP 4 663 517 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10421490 B